## Europäisches Patentamt
## European Patent Office
## Office européen des brevets

(19)

(11) Publication number: **0 000 211**
**B1**

(12) **EUROPEAN PATENT SPECIFICATION**

(45) Date of publication of patent specification: 07.04.82

(21) Application number: 78200010.3

(22) Date of filing: 01.06.78

(51) Int. Cl.³: **B 62 D 55/24,**
**B 62 D 55/04, B 62 D 49/06**

(54) Tracked vehicles.

(30) Priority: 24.06.77 NL 7707007

(43) Date of publication of application:
10.01.79 Bulletin 79/1

(45) Publication of the grant of the patent:
07.04.82 Bulletin 82/14

(84) Designated Contracting States:
DE

(56) References cited:
BE - A - 727 102
DE - A - 1 480 857
DE - A - 1 655 671
DE - B - 1 200 700
DE - B - 1 201 201
DE - B - 1 480 789
FR - A - 1 355 528
NL - A - 76 05810
US - A - 2 461 849
US - A - 2 815 988
US - A - 3 062 327
US - A - 3 105 536
US - A - 3 107 128

(73) Proprietor: C. van der Lely N.V.
Weverskade 10
NL-3155 ZG Maasland (NL)

(72) Inventor: van der Lely, Cornelis
7, Brüschenrain
Zug (CH)

(74) Representative: Mulder, Herman et al,
Weverskade 10
NL-3155 ZG Maasland (NL)

(56) References cited:
US - A - 3 118 709
US - A - 3 161 443
US - A - 3 604 763
US - A - 3 767 275

## Tracked vehicles

The invention relates to a vehicle of the kind which comprises agricultural tractors, trucks, cars, soil cultivating machines, said vehicle comprising at least one endless track arranged around at least two ground wheels of the vehicle, one of said ground wheels being drivable by an engine of the vehicle and the track comprising an endless belt, the outer side of said belt being provided with a plurality of transverse ridges which project from the belt.

Vehicles of this kind (DE—A—1655671) are intended for use on wet, soft or slippery ground whereby the ridges have to increase the grip of the track on the ground. However, it turns out that, under bad conditions, the ridges scrape away the upper layer of the ground and, consequently, the grip is insufficient for transmitting the available driving torque of the ground wheels to the ground.

An object of this invention is to provide a vehicle of said kind with a track having improved characteristics for transmission of the driving torque of the wheels to the ground. According to the invention, each of the ridges comprises a supporting part, the outer face of which comes into contact with the ground and which supporting parts extends substantially parallel to and at a distance from the adjacent part of the belt, and a tie part which connects said supporting part with the belt, and, as seen in side view, the tie part is narrower than the supporting part such that the supporting part and the tie part define a cavity which is orientated to the front with respect to the relative direction of movement (B) of the track for forward travel of the vehicle, said belt being substantially composed of flexible material.

In this way a vehicle's track can be derived whereby the reaction force of the ground on the supporting part deform the flexible belt, tilting the cavity obliquely downwardly so as to exert a downwardly directed force on the ground, preventing scraping away of the upper ground layer.

US—A—3161443 discloses a flexible belt provided with ridges which are, in side view, tapering in onward direction. In operation, earth particles can easily escape in downward direction along the front face of each ridge.

BE—A—727102 shows a flexible track which is provided with outwardly directed cavities formed by outwardly tapering ridges which are disposed close together.

For a better understanding of the invention, and to show how the same may be carried into effect, reference will be made, by way of example, to the accompanying drawings, in which:—

Fig. 1 is a side elevation of a tractor in accordance with the invention,

Fig. 2 is a plan view of the tractor of Figure 1,

Fig. 3 is a side elevation to an enlarged scale of part of the rear of the tractor as seen in the direction of the arrow III—III in Figure 2,

Fig. 4 is a part sectional elevation taken on the line IV—IV in Figure 3.

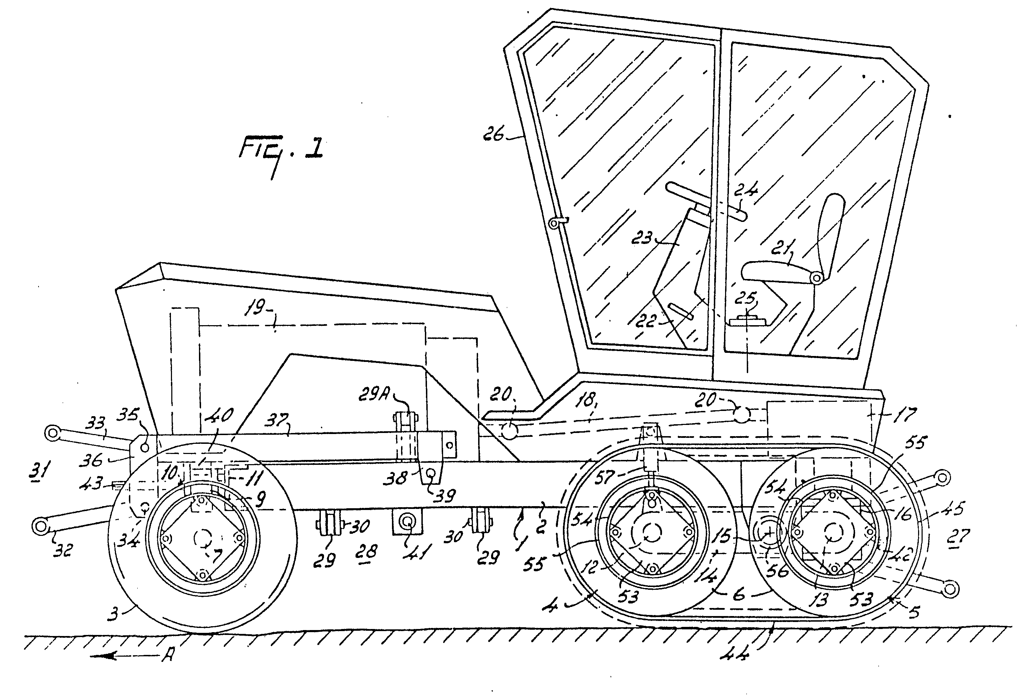

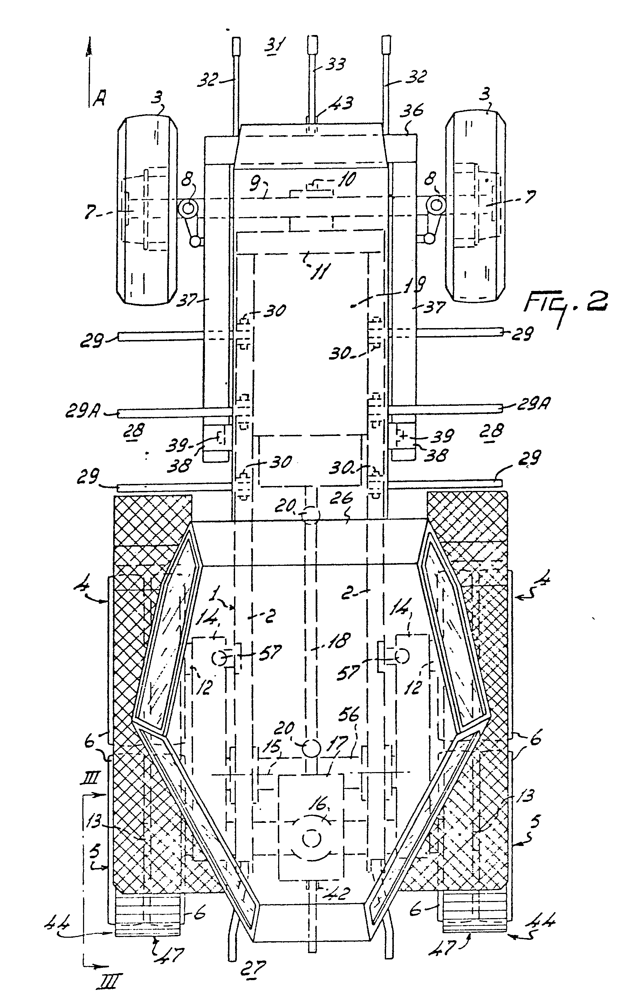

The vehicle shown in Figure 1 comprises a frame 1 having two substantially horizontal and relatively parallel frame beams 2, the frame 1 being supported by steerable front wheels 3 and by two pairs of rear wheels 4 and 5 arranged one behind the other on either side of the vehicle. The two foremost rear wheels 4 and the hindmost rear wheels 5 are in line behind the former considered in the direction A and are provided with tyres 6 having conventional profiles. The front wheels 3 are also provided with tyres. The diameter of the foremost rear wheel 4 is substantially equal to that of the hindmost rear wheels 5. In this embodiment, the diameter of the front wheels 3 is equal to that of the rear wheels 4 and 5 but the diameter of the front wheels 3 may be larger or smaller than that of the rear wheels. Axles 7 of the front wheels 3 are fastened through steerable pivot pins or king pins 8 to a front axle beam 9 extending perpendicular to the direction A, the beam 9 being freely pivotable in a vertical plane of substantial symmetry of the tractor on a horizontal pivot shaft 10 extending in the direction A, and being journalled in a support fastened to a transverse beam 11 which interconnects the front ends of the longitudinal frame beams 2. Viewed from one side (Figure 1) the pivotal shaft 10 is located substantially midway between the top and bottom of the transverse beam 11. Wheel axles 12 of the foremost rear wheels 4 and wheel axles 13 of the hindmost rear wheels 5 are supported, for the wheels 4 and 5 on one side of the tractor, in a beam 14 extending parallel to the direction A and being located alongside the corresponding frame beam 2. The supporting beam 14 is freely pivotable about a shaft 15 which extends horizontally perpendicular to the direction A and which is located beneath the bottoms of the frame beams 2. The two supporting beams 14, together with the rear wheels coupled thereto, are freely pivotable about the shaft 15. The pivotal shaft 15 is located on one side of the aforementioned vertical plane of substantial symmetry between the wheel axles 12 and 13, that is to say, between said plane and the corresponding wheel axle 13. The foremost rear wheels 4 are freely rotatable on the axles 12. The two wheel axles 13 are extended in the space between the two supporting beams 14 and are coupled together by a differential gear 16 which has an upwardly extending input shaft coupled with the output shaft of a torque converter 17, the latter being pivotable to a limited extent relative to the frame 1 of the tractor and being connected to said frame. The torque converter 17 is located, viewed in side elevation wholly or partly above the hindmost rear wheels 5. The connection between the output shaft of the torque converter 17 and the input shaft of the differential 16 is telescopic in view of potential movements of the supporting beams 14. The torque converter 17 may comprise two pairs of adjustable wheel discs, said pairs being interconnected by a chain so that, by relative adjustment of each of the pairs of wheel discs, a continuously variable transmission can be obtained. The torque converter 17 comprises an input shaft which can be driven through an auxiliary shaft 18 by the tractor engine 19, the auxiliary shaft 18 preferably being telescopic and being provided with two universal joints 20 so that relative movements of the torque converter 17 and the tractor engine 19 are possible.

The front wheels 3 are steerable from a driver seat 21, which is located, as seen in Figure 1, at a distance above the top point of the rear wheels 4 and 5 and, viewed in plan (Figure 2), in the position shown in Figure 1 between the wheel axles 12 and 13. The driver seat 21 is fastened to a console 22, to which is fastened, moreover, a column 23 provided with a steering wheel 24 and all further steering and control-members. The assembly of the seat 21, the console 22, the column 23, the steering wheel 24 and all further steering and control-members is pivotable as a whole about a substantially vertical pivotal shaft 25 located in the vertical plane of substantial symmetry of the tractor. The assembly can be fixed in two positions differing by 180° around the axis of said shaft 25 so that the front of the seat 21 faces in the direction of forward travel A or in the opposite direction. The driver seat 21 is surrounded by a cabin 26 extending, as seen in Figure 1, above the rear wheels 4 and 5.

The rear of the tractor shown in Figure 1 has a three-point lift 27 which can be hydraulically energized from the driver seat 21. Viewed in Figure 1, those parts of the two frame beams 2 which are located between the rear regions of the front wheels 3 and the front regions of the rear wheels 4 are provided on either side of the tractor with a lifting device 28, the lower lifting arms 29 of which are connected to the bottoms of the frame beams 2 so as to be pivotable about horizontal shafts 30 extending in the direction A by hydraulic agency from the driver seat 21. The top arm 29A of the lift 28 bears on the top of the adjacent frame beam 2.

A front three-point lift 31 comprises lower lifting arms 32 and a top lifting arm 33 arranged to pivot about substantially horizontal shafts 34 and 35 respectively, said shafts extending perpendicular to the direction A and being journalled in a support 36 located at a small distance in front of the front axle 9. The lifting device 31 can also be actuated from the driver seat 21 by hydraulic agency. The support 36 is fastened in position by two arms 37 extending away from the support 36 to the rear. Each of the arms 37 is located, as seen in Figure 1, at a small distance above the top of the adjacent frame beam 2 and, as seen in Figure 2, on the outer side of the corresponding frame beam 2. Near the rearmost ends of the arms 37, which are located, viewed in plan, about midway across the space between the wheel axles 7 and 12, said arms are provided with fastening lugs holding horizontal pivotal shafts 39 extending perpendicular to the direction A. Each of the pivotal shafts 39 is fastened to the side of the adjacent frame beam 2. The joint between each pivotal shaft 39 and the associated lug 38 is preferably movable, for example, by means of a ball hinge arranged in a comparatively large rubber support socket in the lug 38. At a short distance behind the support 36 the bottom of each arm 37 bears on the top of the front axle beam 9, whilst, between the bottom of each arm 37 and the top of the front axle beam 9, there may be arranged a rubber support 40. An undesirable upward displacement of either arm 37 with respect to the front axle beam 9 is prevented by a stop (not shown) formed, for example, by a bolt passed vertically through the arm 37 and fastened in the front axle beam 9, said bolt having a stop plate bearing on the top of the arm 37. In this way the lift 31 can follow the movements of the front axle beam 9 so that a machine or a tool attached to the lift 31 can match the unevennesses of the ground independently of the movements of the tractor frame 1. The tractor frame 1 generally follows the movements of the rear wheels which are located, however, at a relatively large distance behind the machine or tool attached to the foremost lift 31. The disposition of the lift 31 is, therefore, preferably such that the machine or tool attached to said lift is located at a relatively short distance from the front wheels 3. Since the front of the tractor frame has, in general, a light construction, this front is advantageously hardly loaded by the lift 31 because the lift directly bears on the front axle beam 9 and otherwise at a place on the tractor frame 1 located at a distance behind the front wheels 3, whilst the pivotal shafts 39 exert, in general, upwardly extending forces on the frame beams 2. Therefore, the lift 31 and its connections may be the same as are provided on standard tractors. Near each lifting device 28, a power take-off shaft 41 extends substantially horizontally, perpendicular to the direction A and is driven at the engine speed. Near the rear lift 27, and also near the front lift 31, further power take-off shafts 42 and 43 are provided.

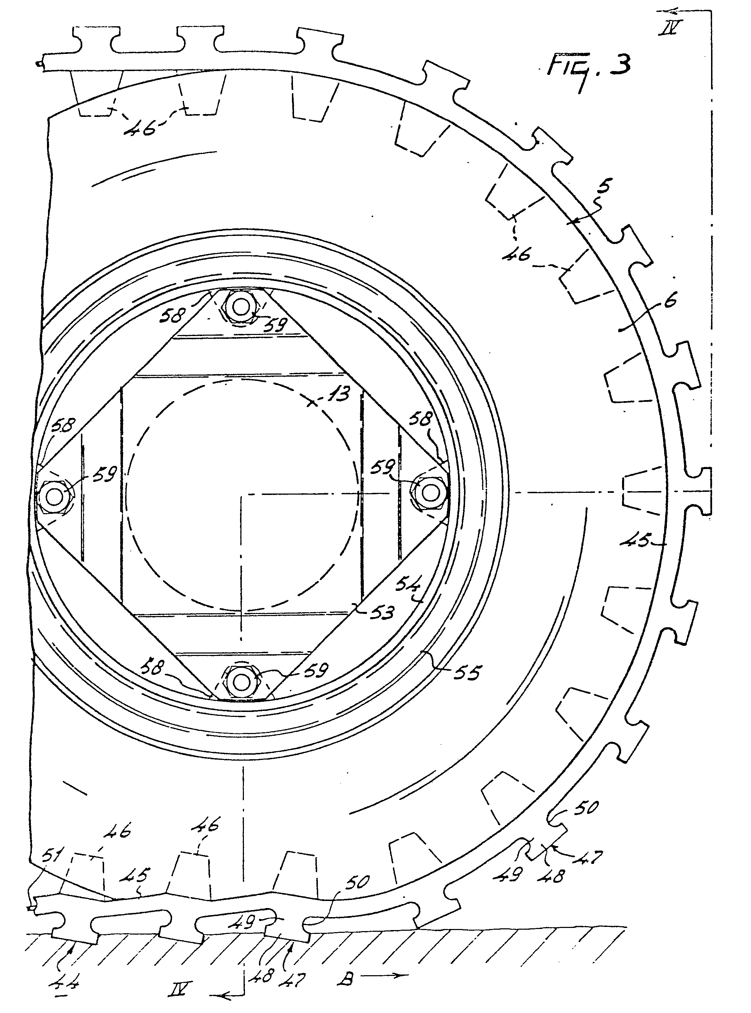

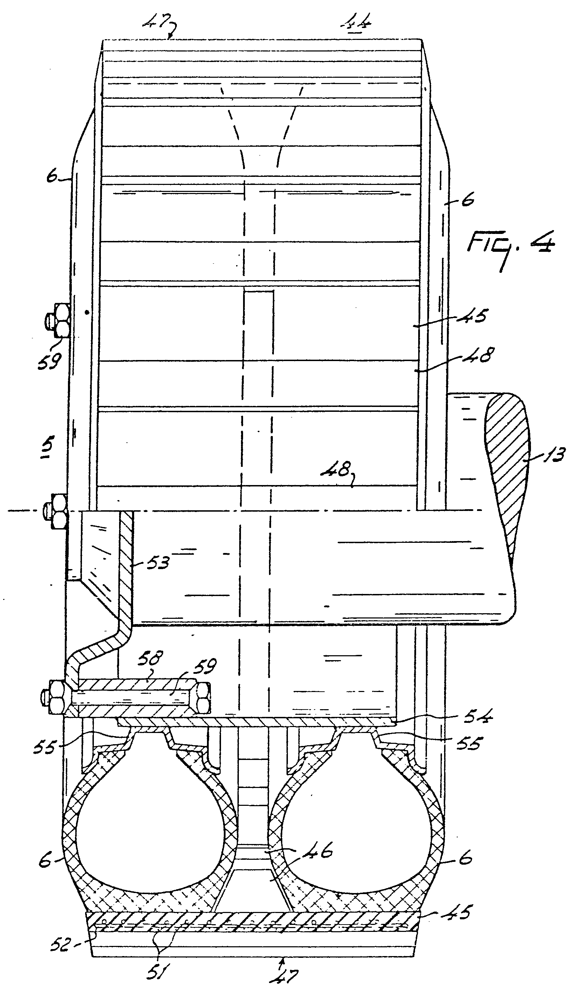

From Figures 3 and 4 it will be apparent that the pairs of rear wheels 4 and 5 on either side of the tractor are surrounded by an endless track 44 passing around the treads of the tyres 6 of the two pairs of wheels 4 and 5. Each endless track 44 comprises an endless belt 45, the width of which corresponds substantially with the width of the adjacent wheels 4 or 5. Each belt 45 is provided on the inner surface facing the wheels 4 and 5 with a large number of equidistant teeth or cams 46 in a row parallel to the direction of length of the belt 45. Considered in the direction of length of each belt (Figure 4) each tooth or cam 46 is disposed symmetrically to a vertical plane of symmetry of that belt 45. Each tooth or cam 46 has the shape of a truncated pyramid, the side faces of which converge away from the belt 45. Considered in the direction of length of the belt 45 (Figure 4) the dimensions of each cam 46 are such that it fits between the side faces adjacent the treads of two tyres 6 on either side of the cam. A cam 46 engaging the wheels 4 or 5 is thus located between the outer parts of two neighbouring tyres 6 and its shape is such that it is firmly in contact with the profiles at the sides of the tyres. This contact pressure is such that, in the case of a driven wheel, the tyres can entertain the teeth or cams and hence the further parts of each track.

On the outer surface that is remote from the wheels 4 and 5, each belt 45 is provided with a large number of transverse ridges 47 covering its whole width. Each ridge 47 is preferably located directly opposite a tooth or cam 46 on the other side of the belt 45. Each ridge 47 is provided, at a distance from the belt 45, with a supporting part 48 having a flat outer surface, which comes into contact with the ground and which has essentially the shape of a parallelepiped. The supporting part 48 of each ridge 47 is connected by a tie part 49 with the belt 45. As seen in Figure 3, each tie part 49 is narrower than the corresponding supporting part 48 and terminates in the supporting part 48 through a cavity. The cavity 50 covers the whole width of each transverse ridge 47. The cavity 50 is orientated to the front with respect to the direction of rotation of the track 44 (direction B in Figure 3) so that the ridge 47 forms a scoop-like member on that side. On the side of the tie part 49 located opposite the cavity 50, a further cavity is provided in this embodiment as a mirror image of the cavity 50. This rear cavity, in the direction B, provides, in the disposition shown, an increased flexibility of the supporting part 48 with respect to the belt 45 and said cavity has the same function as the cavity 50 when the track 44 is applied to the wheels in a reversed position or when the tractor travels rearwardly. Figure 4 shows that the belt 45 is provided with a liner comprising a large number of coplanar, parallel steel wires 51 extending parallel to the direction of length of the track 44, said wires being endless on a circular path. These steel wires 51 are interconnected by a large number of steel wires 52 extending parallel to one another in the direction of width of the endless track 44. The steel wires 52 are preferably fastened to the steel wires 51 crossing the same at right angles so that a network is formed. Instead of using steel wires, strong synthetic plastics or other fibres may be employed. The network of steel wires 51 and 52 is embedded in the material of the belt 45. The belt 45, the teeth or cams 46 and the transverse ridge 47 are integral and made from a single piece of flexible material, for example, a synthetic resin or a rubber-like material.

During operation, the tractor engine 19 drives only the axles 13 of the hindmost rear wheels 5 through the auxiliary shaft 18, the variable torque converter 17 and the differential 16. With a direction of rotation of the rear wheels 5 corresponding with the direction A, the driving moment of each wheel axle 13 is transmitted through a wheel disc 53 (Figure 4) to a wheel flange 54 holding wheel rims 55 of the tyres 6. Upon rotation, the tyres carry along the teeth or cams 46 located between them so that each track 44 is rotated. The foremost rear wheels 4 are driven solely by the tracks 44. The tractive run of each track 44 is located on the ground and is vigorously drawn rearwardly by the driving moment of the hindmost rear wheel 5 (direction B) so that parts of the track deform as is shown in Figure 3. The reaction force exerted by the ground on the supporting parts 48 curves the belt 45 so that the supporting parts 48 tilt to some extent and the cavities 50 grip into the ground, thus providing a very high resistance to slipping and skidding.

It has been found that the grip of the tyres 6 on the sandwiched cams 46, when the tractive part of each track 44 is in contact with the ground, is appreciably higher than in the case in which the tractive part of the track is not in contact with the ground. This is the case, for example, when the rear wheels 5 are driven so that the tractor travels in reverse. This increased clamping of the teeth or cams 46 between the tyres 6 depends upon the resistance experienced by the tractive part of the track on the ground, which resistance is appreciably influenced by the aforesaid tilting movement of the supporting parts 48. A similar track structure may also be used when, on either side of the tractor, only two wheels are provided one behind the other. In this case the teeth or cams are arranged in two parallel rows so that a tyre fits between the rows of cams with clamping force.

The assembly of the two pairs of rear wheels 4 and 5, the track 44 and the adjacent supporting beam 14 is coupled by a shaft 56 with the similar assembly on the other side of the tractor. The centre line of the shaft 56 is formed by the axis of the shaft 15. The shaft 56 is held by means of supports on the bottoms of the frame beams 2. Near the front of the two supporting beams 14, upwardly extending hydraulic cylinders 57 are provided for actuation from the driver's seat. The top of each hydraulic cylinder 57 is pivoted to the tractor frame 1, whereas the bottom of each cylinder is pivoted to the top of a supporting beam 4. By simultaneous actuation of the hydraulic cylinders 57, the two aforesaid assemblies can be turned about the pivotal shaft 15 and can be fixed in chosen ones of a plurality of angular positions, which is important when the tractor is steered by the front wheels 3 through a bend, in which case the contact surface with the ground is reduced. By moving the fronts of the supporting beams 14 downwardly, the wheel base, measured in the direction of length of the tractor, can be materially reduced whereas, at an upward movement of the front ends of the supporting beams 14, said wheel base is enlarged. During normal operation, the cylinders 57 cannot be energized so that the assemblies of wheels and tracks can freely match the ground. Since the shaft 56 is journalled on the frame beams 2 at a place located closer to the axles 13 of the hindmost rear wheels than to the axles 12 of the foremost rear wheels, the pressure on the driven rear wheels is higher than the pressure on the rear wheels 4 which are not directly driven. This is important for the tilting movement of the ridges 47 of the track 44. The wheel discs 53 are fastened by bushings 58 welded to the wheel flanges 54 (Figure 4). Each bushing 58 has an uninterrupted hole for receiving one of four bolts 59 by which each wheel disc 53 can be fastened to the associated wheel flange 54. Each wheel disc 53 has a square shape (Figure 3) so that, after release of the four bolts 59, the wheel flange 54 together with the bushings 58, after a small turn about the wheel axle, can be removed in an outward direction. The wheel flange 54, together with the corresponding tyres 6 can be inverted so that the bushings 58 can be mounted on the outer side of the wheel disc 53. In this way the gauge of the wheel is provided with the tracks.

The steps described above are not limited to use with tractors. They may also be carried out on vehicles subjected to analogous conditions, for example, motorvans, trucks, soil cultivating machines, lorries, tool carriers and the like.

## Claims

1. A vehicle of the kind which comprises agricultural tractors, trucks, cars, soil cultivating machines, said vehicle comprising at least one endless track (44) arranged around at least two ground wheels (4, 5) of the vehicle, one of said ground wheels being drivable by an engine (19) of the vehicle and the track comprising an endless belt (45), the outer side of said belt being provided with a plurality of transverse ridges (47) which project from the belt, characterized in that each of the ridges (47) comprises a supporting part (48), the outer face of which comes into contact with the ground and which supporting part extends substantially parallel to and at a distance from the adjacent part of the belt, and a tie part (49) which connects said supporting part (48) with the belt, and, as seen in side view, the tie part (49) is narrower than the supporting part (48) such that the supporting part and the tie part define a cavity (50) which is orientated to the front with respect to the relative direction of movement (B) of the track for forward travel of the vehicle, said belt (45) being substantially composed of flexible material.

2. A vehicle according to claim 1, characterized in that the supporting part (48) and the tie part (49) cover substantially the whole width of the belt (45).

3. A vehicle according to claim 1 or claim 2, characterized in that said ridge (47) comprises a further cavity which is directed to the rear with respect to the relative movement of the track (44) for forward travel of the vehicle.

4. A vehicle according to claim 3, characterized in that said supporting part (48) and the corresponding tie part (49) are arranged to define said further cavity to be a mirror image of the first cavity (50), as seen in side view.

5. A vehicle according to any one of claims 1 to 4, characterized in that said supporting part (48) has, as seen in side view, substantially the shape of a parallelepiped.

6. A vehicle according to any one of the preceding claims, characterized in that the assembly of said ground wheels (4, 5) and track (44) is pivotable with respect to further parts of the vehicle about an axis (15) which extends parallel to the axles (12, 13) of said ground wheels (4, 5).

7. A vehicle according to claim 6, characterized in that the distance between said pivot axis (15) and the axle (13) of said drivable ground wheel (5) is less than the distance between said pivot axis (15) and the axle (12) of another undriven wheel (4).

## Patentansprüche

1. Fahrzeug der Art, die landwirtschafliche Schlepper, Lastwagen, Kraftwagen, Bodenbearbeitungsmaschinen umfaßt, mit mindestens einer endlosen Raupe (44), die um mindestens zwei Bodenräder (4, 5) des Fahrzeuges geführt ist, von denen eines durch einen Motor (19) des Fahrzeuges antreibbar ist, wobei die Raupe einen endlosen Riemen (45) aufweist, dessen Außenseite mit einer Mehrzahl von Querrippen (47) versehen ist, die über den Riemen überstehen, dadurch gekennzeichnet, daß jede der Rippen (47) ein Tragglied (48) aufweist, dessen Außenfläche mit dem Boden in Berührung kommt, und das sich im wesentlichen parallel zu und mit Abstand von dem benachbarten Teil des Riemens erstreckt, und daß jede Rippe ein Verbindungsglied (49) aufweist, welches das Tragglied (48) mit dem Riemen verbindet und in Seitenansicht schmaler ist als das Tragglied (48), derart, daß das Tragglied und das Verbindungsglied einen Hohlraum (50) definieren, der nach vorne ausgerichtet ist, bezogen auf die relative Bewegungsrichtung (B) der Raupe bei Vorwärtsfahrt des Fahrzeuges, wobei der Riemen (45) im wesentlichen aus flexiblem Material besteht.

2. Fahrzeug nach Anspruch 1, dadurch gekennzeichnet, daß das Tragglied (48) und das Verbindungsglied (49) im wesentlichen die ganze Breite des Riemens (45) einnehmen.

3. Fahrzeug nach Anspruch 1 oder 2, dadurch gekennzeichnet, daß die Rippe (47) einen weiteren Hohlraum aufweist, der nach hinten ausgerichtet ist, bezogen auf die relative Bewegungsrichtung der Raupe (44) bei Vorwärtsfahrt des Fahrzeuges.

4. Fahrzeug nach Anspruch 3, dadurch gekennzeichnet, daß das Tragglied (48) und das zugehörige Verbindungsglied (49) so angeordnet sind, daß der weitere Hohlraum in Seitenansicht als Spiegelbild des ersten Hohlraumes (50) definiert ist.

5. Fahrzeug nach einem der Ansprüche 1 bis 4, dadurch gekennzeichnet, daß das Tragglied (48) in Seitenansicht im wesentlichen die From eines Parallelepipeds hat.

6. Fahrzeug nach einem der vorhergehenden Ansprüche, dadurch gekennzeichnet, daß die aus den Bodenrädern (4, 5) und der Raupe (44) bestehende Einheit in bezug auf andere Teile des Fahrzeuges um eine Achse (15) schwenkbar ist, die sich parallel zu den Achsen (12, 13) der Bodenräder (4, 5) erstreckt.

7. Fahrzeug nach Anspruch 6, dadurch gekennzeichnet, daß der Abstand zwischen der Schwenkachse (15) und der Achse (13) des antreibbaren Bodenrades (5) kleiner ist als der Abstand zwischen der Schwenkachse (15) und der Achse (12) eines anderen, nicht antreibbaren Rades (4).

**Revendications**

1. Véhicule du type comprenant les tracteurs agricoles, les camions, les automobiles, les machines à cultiver le sol, ledit véhicule comprenant au moins une chenille sans fin (44) passant autour d'au moins deux roues de sol (4, 5) du véhicule, l'une de ces roues de sol pouvant être entraînée par un moteur (19) du véhicule et la chenille comprenant une bande sans fin (45), le côté externe de ladite bande étant pourvu de plusieurs nervures transversales (47) faisant saillie à partir de la bande, caractérisé en ce que chacune des nervures (47) comprend une section de support (48) dont la face externe vient en contact avec le sol, cette section de support s'étendant sensiblement parallèlement à et à une certaine distance de la section adjacente de la bande, une section de liaison (49) reliant ladite section de support (48) à la bande, et, en vue latérale, la section de liaison (49) étant plus étroite que la section de support (48) de manière que la section de support et la section de liaison définissent une cavité (50) orientée vers l'avant par rapport à la direction relative du mouvement (B) de la chenille faisant avancer le véhicule.

2. Véhicule selon la revendication 1, caractérisé en ce que la section de support (48) et la section de liaison (49) récouvrent sensiblement la totalité de la largeur de la bande (45).

3. Véhicule selon la revendication 1 ou la revendication 2, caractérisé en ce que ladite nervure (47) comprend une autre cavité dirigée vers l'arrière par rapport au mouvement relatif de la chenille (44) quand le véhicule avance vers l'avant.

4. Véhicule selon la revendication 3, caractérisé en ce que ladite section de support (48) et la section de liaison (49) correspondante sont disposées de manière à definir ladite autre cavité de façon symétrique par rapport à la première cavité (50), en vue latérale.

5. Véhicule selon l'une quelconque des revendications 1 à 4, caractérisé en ce que ladite section de support (48) présente, en vue latérale, sensiblement la forme d'un parallélépipède.

6. Véhicule selon l'une quelconque des revendications précédentes, caractérisé en ce que l'ensemble constitué par lesdites roues de sol (4, 5) et la chenille (44) peut pivoter par rapport à d'autre parties du véhicule autour d'une axe (15) s'étendant parallèlement aux essieux (12, 13) desdites roues de sol (4, 5).

7. Véhicule selon la revendication 6, caractérisé en ce que la distance entre ledit axe de pivotement (15) et l'essieu (13) de ladite roue de sol qui peut être entraînée (5) est inférieure à la distance entre ledit axe de pivotement (15) et l'essieu (12) d'une autre roue (4) qui n'est pas entraînée.

FIG. 1

0 000 211

FIG. 2

FIG. 3

3

FIG. 4